(19) Europäisches Patentamt
European Patent Office
Office européen des brevets

(11) **EP 2 182 626 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
***H02M 7/219*** *(2006.01)*

(21) Anmeldenummer: **08019112.5**

(22) Anmeldetag: **31.10.2008**

(54) **Verfahren zum Betrieb eines Stromrichters und nach dem Verfahren arbeitender Stromrichter**

Method for operating a frequency converter and frequency converter operating by the method

Procédé destiné au fonctionnement d'un convertisseur de courant et convertisseur de courant fonctionnant selon ce procédé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**05.05.2010 Patentblatt 2010/18**

(73) Patentinhaber: **Siemens Aktiengesellschaft 80333 München (DE)**

(72) Erfinder:
• **Bauer, Franz, Dr.**
**91074 Herzogenaurach (DE)**
• **Benesch, Norbert, Dr.**
**90562 Heroldsberg (DE)**

(56) Entgegenhaltungen:
**EP-A- 0 650 249        DE-A1-102005 012 150**
**DE-A1-102006 015 031    JP-A- 56 098 373**
**JP-A- 60 055 855**

• **JIANN-FUH CHEN ET AL: "Modular parallel three-phase inverter system" INDUSTRIAL ELECTRONICS, 1995. ISIE '95., PROCEEDINGS OF THE IEEE INTER NATIONAL SYMPOSIUM ON ATHENS, GREECE 10-14 JULY 1995, NEW YORK, NY, USA,IEEE, US, Bd. 1, 10. Juli 1995 (1995-07-10), Seiten 237-242, XP010161423 ISBN: 978-0-7803-2683-5**

**Beschreibung**

Die Erfindung betrifft ein Verfahren zum Betrieb eines Stromrichters, einen nach dem Verfahren arbeitenden Stromrichter sowie ein Computerprogramm und ein Computerprogrammprodukt, also einen Datenträger, mit dem das Verfahren implementiert ist bzw. auf dem eine Implementierung des Verfahrens gespeichert ist.

Bei dem Stromrichter handelt es sich um einen Stromrichter mit einem mit steuerbaren Halbleiterschaltern bestückten Leistungsteil, wobei die Halbleiterschalter in einer Brückenschaltung angeordnet sind, so dass Leistungsteil und Brückenschaltung einander entsprechen. Zur Ansteuerung der Halbleiterschalter ist eine Ansteuerlogik vorgesehen. Diese erzeugt Ansteuersignale für die einzelnen Halbleiterschalter und bewirkt damit deren Ansteuerung, also deren Aktivierung oder Deaktivierung.

Stromrichter und Verfahren zu deren Betrieb sind an sich bekannt. Insoweit wird zum Stand der Technik auf die DE 10 2005 012 150 A1 und die DE 10 2006 015 031 A1 verwiesen. Ein Stromrichtergerät oder eine Stromrichterschaltung umfassen jeweils zumindest einen Netzanschluss und als Netzanschluss dafür vorgesehene, als Strompfade fungierende Stränge, beim Anschluss an ein Dreiphasennetz also drei Stränge. Sodann den eigentlichen Stromrichter mit der die Stromrichtungsfunktionalität implementierenden Brückenschaltung und am Ausgang des Stromrichters einen Zwischenkreis, wobei ein erster Ausgang des Stromrichters einen ersten Zwischenkreiskontakt und ein zweiter Ausgang des Stromrichters einen zweiten Zwischenkreiskontakt bilden. Zwischen diesen beiden Zwischenkreiskontakten liegt im Betrieb eine Zwischenkreisspannung. Zur Pufferung und Glättung der Zwischenkreisspannung ist zwischen den Zwischenkreiskontakten üblicherweise ein Kondensator als Zwischenkreiskapazität angeordnet.

Bei Stromrichtern der o. g. Art unterscheidet man aktive Stromrichter in Ansehung des jeweils verwendeten Modulationsverfahrens. Mit dem jeweils verwendeten Modulationsverfahren werden Schaltsignalfolgen, also Folgen von Ansteuersignalen, zum Ansteuern der Halbleiterschalter berechnet oder in sonst geeigneter Weise festgelegt. In der Fachliteratur wird eine große Bandbreite verschiedener Modulationsverfahren diskutiert, die sich z. B. hinsichtlich des Oberschwingungsgehaltes der ausgegebenen Spannungen oder hinsichtlich der thermischen Belastung der Halbleiterschalter unterscheiden. Die einzelnen Modulationsverfahren zeichnen sich also durch charakteristische Vor- und Nachteile aus. Als zwei große Gruppen von Modulationsverfahren sind eine spannungseinprägende Modulation und eine stromeinprägende Modulation zu nennen.

Bei spannungseinprägenden Modulationsverfahren muss der Sollwert der Stromrichter-Ausgangsspannung für den folgenden Arbeitstakt bekannt sein und wird im Mittel (z. B. mit einer Pulsweitenmodulation, PWM) über diesen Takt realisiert. Die Halbleiterschalter des Stromrichters werden so geschaltet, dass sich an den Ausgangsklemmen im Mittel die geforderte definierte Spannung ergibt. Zur Kompensation von Schaltzeiten und unerwünschten Spannungsabfällen an den Bauelementen des Stromrichters kann auch eine Korrektur oder eine Rückkopplung der tatsächlichen Ausgangsspannung auf das vorberechnete Schaltmuster erfolgen.

Zu den spannungseinprägenden Verfahren zählen

- die sogenannte Raumzeigermodulation (RZM), die eine Pulsweitenmodulation im symmetrischen 3-phasigen Drehstromsystem realisiert;
- die sogenannte Flat-Top-Modulation (FTM) als Variante der RZM mit jeweils einem dauerhaft eingeschalteten Halbleiterschalter zur Reduzierung der mittleren Schaltfrequenz und der thermischen Verluste;
- die sogenannte optimierten Pulsmuster, die bei gegebenem Aussteuergrad (Länge des Spannungszeigers) und gegebener Schaltfrequenz hinsichtlich eines oder mehrerer Kriterien (Oberwellengehalt, Geräusche, Verlustleistung, etc.) optimiert sind.

Vorteile der spannungseinprägenden Verfahren sind u. a. ein deterministisches Verhalten des Stromrichters und Antriebsverbands mit definierter Schaltfrequenz. Des Weiteren ist eine hohe Regelungsgüte erzielbar, da z. B. keine Lose im Strom auftritt, die im elektrischen Antrieb zu einem Drehmomentrauschen führt. Darüber hinaus treten im Frequenzspektrum der Ausgangsspannung definierte ausgeprägte Frequenzlinien auf. Eine Gesamtanlage kann damit so abgestimmt werden, dass Resonanzeffekte vermieden werden. Das Schaltmuster kann so ausgelegt werden, dass Mehrfachschalthandlungen, d. h. gleichzeitige Umschaltungen in mehreren Phasen, die zu großen Spannungssteilheiten führen, vermieden werden, thermische Verluste reduziert werden und eine Mittelpunktspannung konstant oder klein wird. Eine über ein Modulationsintervall mittelnde Strommessung liefert, wenn Regelungstakt und Modulationsintervall synchronisiert sind, exakte Messwerte für eine Regelung in dieser Hinsicht.

Nachteile der spannungseinprägenden Verfahren sind u. a.: Der Strom ist nicht eingeprägt, sondern ergibt sich aus dem realisierten Spannungssollwert an den Ausgangsklemmen und der aktuellen Gegenspannung. Daraus kann insbesondere bei Störungen oder Regelungsfehlern ein Geräteüberstrom für den Stromrichter resultieren, der zu einer Abschaltung und damit ggf. zu einer unerwünschten Betriebsunterbrechung führt. Sodann müssen einzelne Frequenzlinien mit hoher Amplitude im pulsfrequenten Bereich ggf. mit aufwändigen Filtern gedämpft werden. Schließlich kann die mit den ausgeprägten Frequenzlinien hoher Amplitude im pulsfrequenten Bereich verbundene Geräuschbelastung ggf. störend sein und zusätzliche aufwändige Dämmung erfordern.

Im Unterschied zu den spannungseinprägenden Verfahren ist bei der stromeinprägenden Modulation die im folgenden Arbeitstakt zu realisierende Ausgangsspannung (und damit ein dafür erforderliches Schaltmuster) nicht im Voraus bekannt. Vorgegeben wird hier ein Sollwert oder ein Toleranzbereich für den Strom. Mit Hilfe einer schnellen Strommessung und eines Algorithmus zur Rückkopplung der Strommessung werden die Halbleiterschalter so gesteuert, dass sich im Mittel die gewünschten Phasenströme ergeben. Das in einem konkreten Takt tatsächlich ausgegebene Schaltmuster ist nicht vorhersagbar und unterliegt - ebenso wie die resultierende Spannung - statistischen Schwankungen.

Zu den stromeinprägenden Verfahren zählt die Strom-Zweipunkt-Regelung, die für jede Phase separat die Halbleiterschalter in Abhängigkeit der Verletzung von oberen und unteren Strom-Toleranzschwellen ansteuert (Hysterese-Regelung).

Vorteile der stromeinprägenden Verfahren sind u. a., dass die Stromrichter durch den Betriebsstrom (nicht Leistung) spezifiziert werden, da die thermischen Verluste als auslegungsbestimmende Größe vor allem durch den Strom vorgegeben werden. Eine Fehlerabschaltung aufgrund "Überstrom" bei Netz- bzw. Laststörungen kann mit stromeinprägender Modulation praktisch nicht mehr auftreten. Daraus resultiert eine hohe Betriebssicherheit in Störfällen. Darüber hinaus treten im Frequenzspektrum keine einzelnen herausgehobenen Linien einzelner Schaltfrequenzen oder deren Oberschwingungen auf. Damit sind die Vorgaben einschlägiger Normen hinsichtlich Netzrückwirkung und EMV ggf. mit geringerem Filteraufwand zu realisieren. Schließlich wird abhängig vom Einsatzbereich die mit dem stochastischen Schaltsignal verbundene Geräuschbildung als subjektiv angenehmer empfunden (im Vergleich zu einem Sinustonsignal).

Nachteile der stromeinprägenden Verfahren sind u. a., dass ein Stromtoleranzbereich mit einer Lose im Strom und damit einem Drehmomentrauschen verbunden ist und sich negativ auf den Gleichlauf eines elektrischen Antriebs auswirkt, dass im Spektrum der Ausgangsspannungen zwar typisch keine ausgeprägten Linien mit großer Amplitude auftreten, andererseits in einem großen Frequenzbereich alle vorhandenen Resonanzpunkte angeregt werden (wenn auch mit geringer Amplitude). Letzteres kann z. B. zu Netzinstabilitäten führen. Bei Anwendungen, die den Stromrichter als Spannungsquelle nutzen (z. B. Erzeugereinheit mit Netzstromrichter) ist eine zusätzliche Regelung nötig, um den Strom so zu regeln, dass an der Last die gewünschte Spannung abfällt.

Das für den jeweiligen Stromrichter gewählte Modulationsverfahren wird bislang so ausgewählt, dass für den Stromrichter ein Gesamtoptimum erreicht wird. Dazu zählen Kriterien wie Gesamtkosten, Anwendungsbereich, Netzrückwirkungen bei netzseitigen Stromrichtern, Geräusche, Verlustleistung, Skalierbarkeit des Systems, verfügbare Rechenleistung in der Steuereinheit, Systemresonanzen im gesamten Umrichter- und Antriebsverband, Einhaltung der Betriebsgrenzen, deterministisches Systemverhalten, erreichbare Regelgüte, Verhalten bei Betriebsstörungen sowie leitungsgebundene und freie elektromagnetische Störaussendung. Ein Abgleich mit den zuvor genannten Eigenschaften der Modulationsprinzipien zeigt, dass mit einem einzelnen Modulationsverfahren in der Regel nur ein suboptimales Stromrichtersystem erreicht werden kann und ein erheblicher Aufwand erforderlich ist, um die Nachteile des für die jeweilige Anwendung gewählten Modulationsverfahrens auszugleichen.

Aus dem Dokument "Modular parallel three-phase inverter system" von Jiann-Fuh Chen et al. ist ein System von parallel geschalteten dreiphasigen Wechselrichtern bekannt. Jeder Wechselrichter in diesem System kann entweder mit spannungseinprägenden oder mit stromeinprägenden Ansteuerungssignalen angesteuert und damit in zwei Betriebsarten betrieben werden, wobei sich die jeweilige Ansteuerung aus der Stellung eines Schalters ergibt. Dadurch kann in einem System mit mehreren Wechselrichtern die entsprechend benötigte Betriebsart für jeden im System befindlichen Wechselrichter separat ausgewählt werden. Der Schalter wird dabei jedoch nicht durch die Ansteuerungssignale angesteuert.

In der EP 0 650 249 A1 wird ein Tiefsetzsteller beschrieben, bei dem eine Umschaltung zwischen verschiedenen Modulationen zur Verbesserung dessen Effizienz bei geringer Auslastung erfolgt. Die Auswahl, ob eine Ansteuerung als spannungseinprägende Pulsweitenmodulation oder stromeinprägende Modulation erfolgt, geschieht auf Basis eines derzeitigen Arbeitszyklus, so dass immer nur die jeweils aktive Modulation ausgewertet wird und unter bestimmten Bedingungen eine Abschaltung des derzeitigen und eine Aktivierung der anderen Modulation erfolgt.

Aus der JP 56 098373 A ist ein Stromrichter bekannt, dessen Halbleiterschalter mit Ansteuersignalen gesteuert werden, wobei für die Generierung der Signale eine logische Verknüpfung von Daten einer spannungseinprägenden Pulsweitenmodulation mit einer transistorspezifischen Überstromabschaltung innerhalb jeder Schaltperiode vorgenommen wird.

Der Erfindung liegt entsprechend als eine Aufgabe zugrunde, ein Verfahren zum Betrieb eines Stromrichters und einen nach dem Verfahren arbeitenden Stromrichter anzugeben, mit dem die o. g. Nachteile vermieden oder zumindest hinsichtlich ihrer Auswirkungen reduziert werden.

Diese Aufgabe wird erfindungsgemäß mit einem Verfahren mit den Merkmalen des Anspruchs 1 gelöst. Dazu ist bei einem Verfahren zum Betrieb eines Stromrichters mit einem mit steuerbaren Halbleiterschaltern bestückten Leistungsteil, wobei eine Ansteuerung der Halbleiterschalter mittels einer Ansteuerlogik auf Basis davon erzeugter Ansteuersignale erfolgt, vorgesehen, dass die Ansteuerlogik Daten für eine spannungseinprägende Modulation und Daten für eine stromeinprägende Modulation erhält und eine logische Verknüpfung der erhaltenen Daten für die Generierung der Ansteuersignale vornimmt.

Die o. g. Aufgabe wird ebenfalls mit einem Stromrichtergerät mit den Merkmalen des Anspruchs 7 gelöst. Dazu ist bei einem Stromrichtergerät mit einem Stromrichter mit einem mit steuerbaren Halbleiterschaltern bestückten Leistungsteil und mit einer Ansteuerlogik zur Erzeugung von Ansteuersignalen für eine Ansteuerung der Halbleiterschalter vorgesehen, dass die Ansteuerlogik Mittel zum Erhalt von Daten für eine spannungseinprägende Modulation und von Daten für eine stromeinprägende Modulation sowie Mittel für eine logische Verknüpfung der erhaltenen Daten zur Generierung der Ansteuersignale umfasst.

Die Erfindung geht von der Erkenntnis aus, dass die Nachteile der spannungs- oder stromeinprägenden Modulationsverfahren bisher im Wesentlichen in Kauf genommen wurden. Vereinzelt sind Ansätze zur Reduktion oder Umgehung der jeweils modulationsverfahrensspezifischen Nachteile bekannt geworden, so z. B. für die spannungseinprägende Modulation ein Mechanismus zum automatischen Quittieren für einen Weiterbetrieb nach Überstrom, eine Verwendung von Filtern für den pulsfrequenten und hochfrequenten Betrieb oder eine schnelle stochastische Variation der Pulsfrequenz zur Reduzierung einer subjektiven Lautstärke. Im Zusammenhang mit der stromeinprägenden Modulation sind Ansätze zur Reduktion der damit einhergehenden Nachteile bekannt geworden, in Form einer Verwendung eines kleinen Toleranzbereichs für die Stromregelung zur Reduzierung einer Lose (daraus resultiert jedoch eine höhere Pulsfrequenz mit größeren thermischen Verlusten), eine Verwendung von Filtern für den puls- und hochfrequenten Betrieb oder eine Implementierung von zusätzlichen Regelungsstrukturen zur Regelung der Ausgangsspannung, wenn die jeweilige Anwendung dies erfordert.

Der Vorteil der Erfindung besteht in der Kombination einer spannungs- und einer stromeinprägenden Modulation, wobei Nachteile, die mit z. B. der spannungseinprägenden Modulation einhergehen, durch die Verwendbarkeit der stromeinprägenden Modulation kompensiert oder verringert werden und umgekehrt. Die gleichzeitige oder quasi gleichzeitige Verwendbarkeit der strom- und spannungseinprägenden Modulation wird dadurch gewährleistet, dass die von dem Stromrichter umfasste Ansteuerlogik Daten sowohl für die spannungs- als auch für die stromeinprägende Modulation erhält und dass die jeweils erhaltenen Daten durch die Ansteuerlogik zur Generierung von Ansteuersignalen für die Halbleiterschalter einer logischen Verknüpfung unterworfen werden. Die logische Verknüpfung bewirkt dabei, dass immer dann, wenn sich aufgrund z. B. der spannungseinprägenden Modulation eine Ausnahmesituation, z. B. Überstrom, ergibt, zur stromeinprägenden Modulation umgeschaltet wird und umgekehrt. Der Ansatz gemäß der Erfindung macht also eine Kombination der Vorteile beider Modulationsverfahren bei gleichzeitiger Vermeidung oder zumindest wesentlicher Reduktion der jeweils damit einhergehenden Nachteile möglich.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass die Daten für die spannungseinprägende Modulation mit einem ersten Signalgenerator erzeugt werden, und zwar in Abhängigkeit von einem dem ersten Signalgenerator zugeführten Spannungssollwert. Der erste Signalgenerator erzeugt damit z. B. Signale für eine Pulsweitenmodulation (PWM). Damit lässt sich ein gewünschter Verlauf einer Spannung am Ausgang des Stromrichters in an sich bekannter Art mit ausreichender Qualität vorgeben. Mit dem dem ersten Signalgenerator zugeführten Spannungssollwert lässt sich die Art und die Qualität der vom Stromrichter zu erzeugenden Ausgangsspannung vorgeben, also bei einer erzeugten Wechselspannung deren Amplitude und Frequenz.

Die Verwendung eines spezifischen Signalgenerators für die Erzeugung der Daten für die spannungseinprägende Modulation macht auch vergleichsweise komplexe Modulationen möglich und gestattet nach Art austauschbarer Module, z. B. durch Anpassung/Austausch eines jeweiligen Modulationsalgorithmus, einen leichten Übergang von einem ersten Modulationsverfahren zu einem anderen Modulationsverfahren.

Zusätzlich oder alternativ ist bevorzugt vorgesehen, dass die Daten für die stromeinprägende Modulation mit einem zweiten Signalgenerator erzeugt werden, und zwar in Abhängigkeit von einem dem zweiten Signalgenerator zugeführten Stromsollwert. Hinsichtlich der Vorteile, die mit dieser Ausführungsform einhergehen, wird auf die obigen Ausführungen zum ersten Signalgenerator für die spannungseinprägende Modulation verwiesen. Gemäß einer besonders bevorzugten Ausführungsform ist vorgesehen, dass der zweite Signalgenerator die stromeinprägende Modulation in Abhängigkeit von dem zugeführten Stromsollwert und einem zugeführten Wert für einen Stromtoleranzbereich erzeugt, so dass eine Schwellwertüberwachung, ggf. eine hysteresebehaftete Schwellwertüberwachung, im Hinblick auf evtl. Überstromsituationen möglich ist.

Weiter bevorzugt ist vorgesehen, dass die Daten für die stromeinprägende Modulation von einem Ergebnis einer Strommessung im Leistungsteil abhängig sind. Durch die Rückführung eines Ergebnisses einer Strommessung im Leistungsteil ist eine Beeinflussung der vom zweiten Signalgenerator erzeugten Daten z. B. dann möglich, wenn das Ergebnis der Strommessung auf eine Überschreitung des dem zweiten Signalgenerator zugeführten Stromsollwertes oder ein Verlassen des Stromtoleranzbereichs hindeutet. Die durch diese Abhängigkeit erreichte Rückkopplung verbessert die Qualität der stromeinprägenden Modulation und hilft, Überstromsituationen und dergleichen zu vermeiden oder zumindest zu beherrschen.

Zusätzlich oder alternativ ist vorteilhaft vorgesehen, dass die Daten für die spannungseinprägende Modulation von einem Ergebnis einer Spannungsmessung im Leistungsteil abhängig sind. Die mit dieser Ausführungsform einhergehenden Vorteile entsprechen analog den oben im Zusammenhang mit der Strommessung und der dortigen Rückkopplung genannten Vorteilen.

Bevorzugt ist vorgesehen, dass die durch die Ansteuerlogik vorgenommene Verknüpfung der Daten für die spannungseinprägende Modulation mit den Daten für die stromeinprägende Modulation eine logische UND-Verknüpfung ist. Eine solche UND-Verknüpfung lässt sich besonders leicht realisieren und gewährleistet, dass, nachdem zunächst als Daten für die spannungs- und stromeinprägende Modulation Ansteuerdaten für sämtliche Halbleiterschalter gemäß beiden Modulationsverfahren generiert werden, ein Halbleiterschalter tatsächlich nur dann angesteuert werden kann, wenn gemäß den Daten für beide Modulationsverfahren eine solche Ansteuerung vorgesehen ist. Wenn nach einem der Modulationsverfahren eine Ansteuerung für einen der Halbleiterschalter nicht zugelassen ist, ergibt sich nach der logischen UND-Verknüpfung, dass der jeweilige Halbleiterschalter sicher gesperrt bleibt.

Bezüglich des Stromrichtergerätes, das eine Ansteuerlogik als Mittel zur Implementierung des hier beschriebenen und nachfolgend weiter erläuterten Verfahrens umfasst, besteht eine bevorzugte Ausführungsform darin, dass eine Verarbeitungseinheit nach Art eines Prozessors oder dergleichen in üblichem Zusammenwirken mit einem Speicher und einem darin zur Implementierung des Verfahren hinterlegten Computerprogramm gleichzeitig als Mittel zum Erhalt von Daten für eine spannungseinprägende Modulation und von Daten für eine stromeinprägende Modulation und als Mittel für eine logische Verknüpfung der erhaltenen Daten zur Generierung der Ansteuersignale fungiert. Die Implementierung der Erfindung kann somit auf Seiten des Stromrichtergerätes in einer Kombination von Soft- und Hardware erfolgen, wobei Verarbeitungseinheit und Speicher die Hardware bilden und das in dem Speicher vorgehaltene Computerprogramm die Software darstellt. In an sich bekannter Wechselwirkung wird eine solche Verarbeitungseinheit mit einem Speicher und einem darin zur Implementierung des Verfahrens vorgehaltenen Computerprogramm zu einer Ansteuerlogik oder einer die Ansteuerlogik umfassenden Ansteuerschaltung wie hier und nachfolgend beschrieben.

Bevorzugt ist vorgesehen, dass das Mittel für die logische Verknüpfung der erhaltenen Daten zur Generierung der Ansteuersignale ein UND-Glied, also eine durch Software ansteuerbare Hardwarerealisierung, insbesondere als Bestandteil der Verarbeitungseinheit, eines UND-Gatters ist.

Das Verfahren entsprechend dem Ansatz gemäß der Erfindung ist bevorzugt in Software implementiert, so dass die Erfindung insoweit auch ein Computerprogramm mit durch einen Computer ausführbaren Programmcodeanweisungen zur Implementierung des hier und nachfolgend beschriebenen Verfahrens, wenn das Computerprogramm auf einem Computer, insbesondere einem Stromrichtergerät mit einer Verarbeitungseinheit nach Art eines Prozessors oder dergleichen, ausgeführt wird. Des Weiteren betrifft die Erfindung insoweit auch ein Speichermedium mit einem durch einen Computer ausführbaren derartigen Computerprogramm und ein Stromrichtergerät, auf dem ein derartiges Computerprogramm geladen ist, insbesondere in dessen Speicher.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen

FIG 1    einen Stromrichter,

FIG 2    eine Ansteuerschaltung für den Stromrichter und

FIG 3    unterschiedliche Betriebssituationen bei der Verwendung des Stromrichters entsprechend dem Ansatz gemäß der Erfindung.

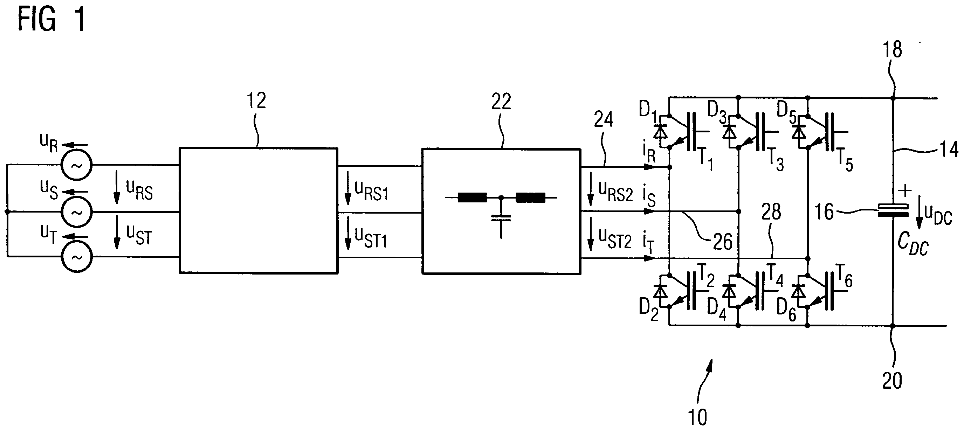

FIG 1 zeigt in einem Prinzipschaltbild schematisch vereinfacht den Anschluss und den Aufbau eines Stromrichters 10 an ein Dreiphasennetz 12, wobei der Stromrichter 10 eine mit steuerbaren Halbleiterschaltern T1, T2, T3, T4, T5, T6 und antiparallelen Dioden D1, D2, D3, D4, D5, D6 bestückte Brückenschaltung, insbesondere in einer Ausführung als IGBT-B6-Brücke, umfasst.

Dem Stromrichter 10 ist an dessen Ausgang ein Zwischenkreis 14 nachgeordnet, der eine Zwischenkreiskapazität 16 ($C_{DC}$) umfasst, über der im Betrieb eine Zwischenkreisspannung $u_{DC}$ abfällt. Von dem Stromrichter 10 sind eine Anzahl oberer Halbleiterschalter T1-T3 mit einem im Betrieb des Stromrichters 10 auf einem ersten Zwischenkreispotential liegenden ersten Zwischenkreiskontakt 18 verbunden. Entsprechend sind eine Anzahl unterer Halbleiterschalter T4-T6 mit einem im Betrieb des Stromrichters 10 auf einem zweiten Zwischenkreispotential liegenden zweiten Zwischenkreiskontakt 20 verbunden. Zwischen dem ersten und dem zweiten Zwischenkreiskontakt 18, 20 ist als Zwischenkreiskapazität 16 ein Zwischenkreiskondensator angeschlossen, und die Potentialdifferenz zwischen den an diesen Kontakten anliegenden Potentialen entspricht der Zwischenkreisspannung $u_{DC}$.

Eingangsseitig ist der Stromrichter 10 zumindest mittelbar, hier über einen Filter 22, mit dem Netz 12 verbunden, und zwar über netzseitige Stränge 24, 26, 28, und zwar derart, dass jeder Strang 24-28 an einen Mittelabgriff zwischen jeweils einem oberen und einem unteren Halbleiterschalter T1-T6 angeschlossen ist. In jedem Strang 24-28 fließt ein durch die Netzspannungen $u_R$, $u_S$, $u_T$ bestimmter Strom $i_R$, $i_S$, $i_T$. Zwischen je zwei Strängen 24-28, deren jeweils eingeprägte elektrische Größe $i_R$, $i_S$, $i_T$, auch als Phasenstrom bezeichnet wird, liegen am Eingang des Netzes 12, am Eingang des Filters 22 und am Eingang des Stromrichters 10 die Anschlussspannungen $u_{RS}$, $u_{ST}$ bzw. $u_{RS1}$, $u_{ST1}$ bzw. $u_{RS2}$, $u_{ST2}$ an.

Die Ansteuerung der Halbleiterschalter T1-T6 erfolgt mit einer in FIG 1 nicht gezeigten Ansteuerschaltung entsprechend einem Modulationsmodus, der so gewählt ist, dass sich am Ausgang des Stromrichters 10 eine gewünschte Zwischenkreisspannung $u_{DC}$ einstellt. Als Modulationsmodus kommt die so genannte Pulsweitenmodulation (PWM) in Betracht. Damit lässt sich ein gewünschter Verlauf der vom Stromrichter erzeugten Ausgangsspannung in an sich bekannter Art mit ausreichender Qualität vorgeben.

Bei dem Stromrichter handelt es sich um einen selbst geführten Stromrichter 10 mit Halbleiterschaltern T1-T6 für einen Vier-Quadranten-Betrieb (Ein- und Rückspeisung von Energie). Der Stromrichter 10 verfügt über Mittel zur Erfassung der Phasenströme $i_R$, $i_S$, $i_T$ und/oder eines Zwischenkreisstroms oder der Zwischenkreisspannung $u_{DC}$. Der Stromrichter 10 verfügt über Mittel zum getakteten Betrieb der Halbleiterschalter T1-T6 entsprechend gängigen Modulationsverfahren zur Spannungseinprägung (z. B. Pulsweitenmodulation) oder Stromeinprägung (z. B. Strom-Zweipunkt-Regler). Der Stromrichter 10 kann als Gleichrichter am Drehstromnetz oder als Wechselrichter betrieben werden, beispielsweise zur Versorgung eines elektrischen Antriebs.

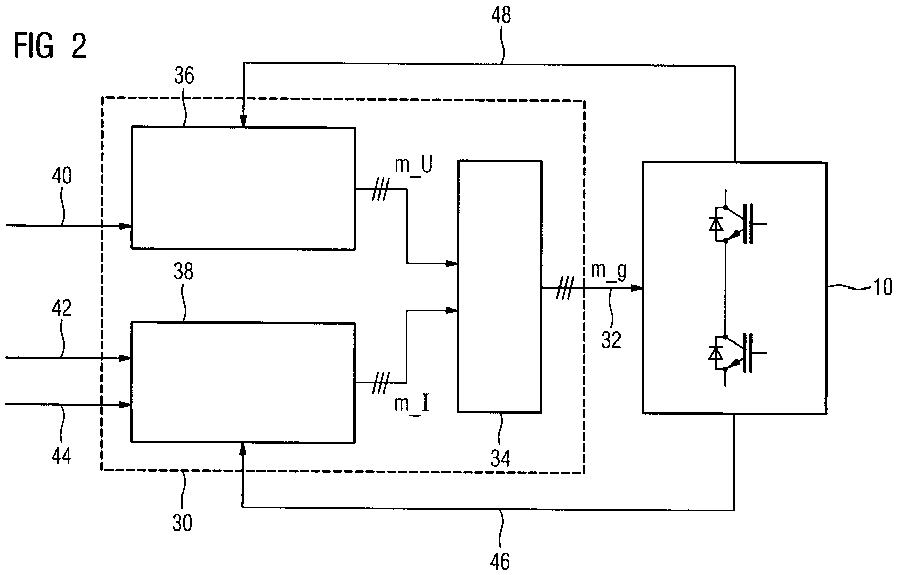

FIG 2 zeigt den Stromrichter 10 nur noch schematisch vereinfacht und eine zu dessen Ansteuerung vorgesehene Ansteuerschaltung 30. Die Ansteuerschaltung 30 erzeugt Ansteuersignale 32 für den Stromrichter 10, genauer für die von dessen Leistungsteil umfassten Halbleiterschalter T1-T6. Die Ansteuersignale 32 sind also Einzelsignale, die jedem Halbleiterschalter T1-T6 separat zugeführt werden, so dass jeder Halbleiterschalter T1-T6 unabhängig von den anderen Halbleiterschaltern T1-T6 aktiviert oder deaktiviert werden kann.

Die Ansteuerschaltung 30 umfasst eine Ansteuerlogik 34 sowie einen ersten und zweiten Signalgenerator 36, 38. Die Ansteuerlogik 34 erhält von dem ersten Signalgenerator 36 Daten für eine spannungseinprägende Modulation und von dem zweiten Signalgenerator 38 Daten für eine stromeinprägende Modulation. Bei den jeweils erhaltenen Daten handelt es sich um Ansteuersignale 32, wie sie bei einer rein spannungseinprägenden oder rein stromeinprägenden Modulation zur Ansteuerung der Halbleiterschalter T1-T6 des Stromrichters 10 verwendet werden können. Die erhaltenen Daten, also die jeweiligen Ansteuersignale 32, werden in FIG 2 symbolisch als $m_U$ und $m_I$ gezeigt. Die Daten für die spannungseinprägende Modulation werden mit dem ersten Signalgenerator 36 in Abhängigkeit von einem diesem zugeführten Spannungssollwert 40 erzeugt. Die Daten für die stromeinprägende Modulation werden mit dem zweiten Signalgenerator 38 in Abhängigkeit von einem diesem zugeführten Stromsollwert 42, ggf. in Abhängigkeit von diesem Stromsollwert 42 und einem zugeführten Stromtoleranzwert 44 erzeugt. Die Daten für die stromeinprägende Modulation sind von einem Ergebnis einer Strommessung 46 im Leistungsteil des Stromrichters 10 abhängig. Dafür wird ein Ergebnis der Strommessung 46 dem zweiten Signalgenerator 38 zugeführt. Für die Generierung von Daten für die spannungseinprägende Modulation kann eine Spannungsmessung 48 im Leistungsteil des Stromrichters 10 berücksichtigt werden. Wenn diese optionale Rückführung ausgenutzt werden soll, wird ein Wert der Spannungsmessung 48 dem ersten Signalgenerator 36 zugeführt.

Die Ansteuerlogik 34 übernimmt eine logische UND-Verknüpfung der vom ersten und zweiten Signalgenerator 36, 38 erhaltenen Daten und generiert damit die Ansteuersignale 32. Dazu wird jedes vom ersten Signalgenerator 36 generierte Ansteuersignal 32 für jeweils einen der Halbleiterschalter T1-T6 mit dem entsprechenden, vom zweiten Signalgenerator 38 erzeugten Ansteuersignal 32 einer logischen UND-Verknüpfung unterworfen und das Ergebnis als Ansteuersignal 32 für den betreffenden Halbleiterschalter T1-T6 verwendet.

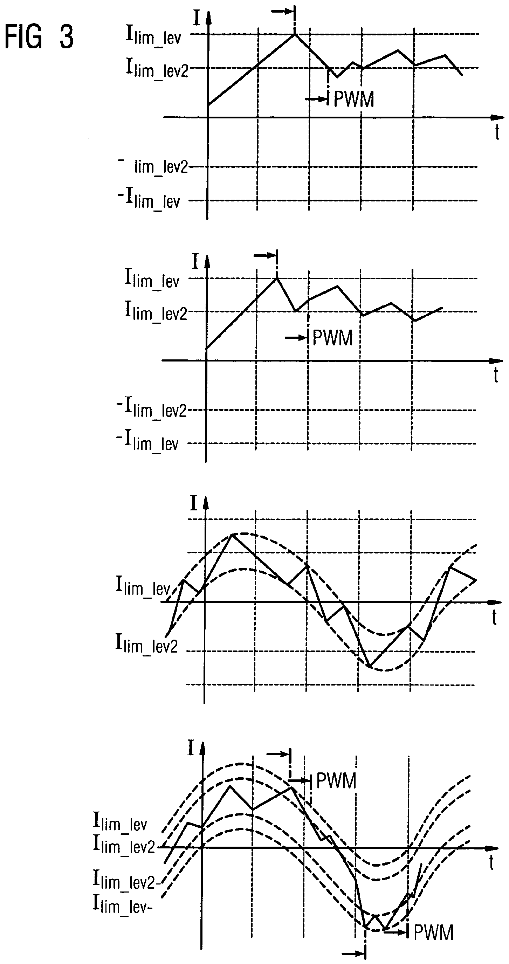

In FIG 3 ist das Ergebnis der Verwendung der Ansteuerschaltung 30 (FIG 2) dargestellt. FIG 3 umfasst vier Darstellungen für unterschiedliche Betriebssituationen, in denen jeweils über der Abszisse die Zeit und über der Ordinate der Strom abgetragen ist. In der obersten Darstellung ist eine überlagerte Spannungseinprägung mit Stromhysterese gezeigt. Der Stromsollwert 42 (FIG 2) und ein diesen umgebender Stromtoleranzbereich 44 (FIG 2) ist symbolisch mit $I_{lim\_lev}$ und $I_{lim\_lev2}$ eingezeichnet. In der ersten Darstellung ist erkennbar, dass, sobald der Strom den oberen Schwellwert ($I_{lim\_lev}$) erreicht, die Strombegrenzung wirksam wird, so dass, wenn der erste Signalgenerator 36 zum Erzeugen von Daten für eine spannungseinprägende Modulation als Pulsweitenmodulator arbeitet, die resultierenden Ansteuersignale 32 als strombegrenzte PWM-Ansteuersignale zur Anwendung kommen. Zur reinen Pulsweitenmodulation wird erst wieder zurückgeschaltet, wenn der Strom unter einen unteren Schwellwert ($I_{lim\_lev2}$) fällt.

In der zweiten Darstellung, die im Wesentlichen der oben beschriebenen ersten Darstellung entspricht, ist gezeigt, dass die Umschaltung zur Pulsweitenmodulation bevorzugt am Ende eines Abtasttaktes, der in den Darstellungen in FIG 3 durch den Abstand zwischen jeweils zwei aufeinander folgenden vertikalen Linien symbolisiert ist, erfolgen kann.

Die dritte Darstellung in FIG 3 zeigt einen Betriebsfall mit dynamischen Stromschwellen ($I_{lim\_lev}$, $I_{lim\_lev2}$). Die untere Darstellung zeigt ebenfalls eine Betriebssituation mit dynamischen Stromschwellen ($I_{lim\_lev}$, $I_{lim\_lev2}$), wobei im zweiten Takt der Strom den Grenzwert $I_{lim\_lev}$ überschreitet, so dass die Pulsweitenmodulation erst wieder zum Einsatz kommt, wenn etwa zu Beginn des dritten Taktes der Strom den unteren Schwellwert $I_{lim\_lev2}$ wieder unterschreitet. Eine ähnliche Situation ist nochmals im vierten Takt gezeigt, wobei im Unterschied zur Ausnahmesituation im zweiten und im dritten Takt die Umschaltung zur Pulsweitenmodulation an der Taktgrenze erfolgt, also bereits nachdem der Strom den Schwellwert $I_{lim\_lev2}$ wieder unterschritten hatte. Bei der Betriebssituation in der dritten Darstellung handelt es sich um eine dauerhaft reine Stromhysterese unabhängig vom Abtasttakt mit dynamischen Stromschwellen. Eine etwaige Umschaltung zur Pulsweitenmodulation findet entsprechend nicht statt.

Dennoch kann hier die vorgeschlagene Kombination der Modulationsverfahren genutzt werden. Bei der reinen Stromhysterese können Zyklen auftreten, in denen in einzelnen Brückenzweigen für relativ lange Zeit keine Schalthandlung stattfindet oder in denen bestimmte Schaltzustände (Nullzeiger: Schaltzustand in allen Brückenzweigen ist gleich) nicht durchlaufen werden. Beides kann zu einer unerwünschten ungleichmäßigen thermischen Belastung der Halbleiterschalter führen. Durch zeitweises (z. B. auch zufälliges) Umschalten oder Kombinieren mit der spannungseinprägenden Modulation kann eine derartige Zyklenbildung vermieden werden.

In der unteren Darstellung in FIG 3 ist eine allgemeine Form des kombinierten Betriebs, also der Kombination einer spannungseinprägenden Modulation entsprechend Daten, wie sie vom ersten Signalgenerator 36 (FIG 2), und Daten für eine stromeinprägende Modulation, wie sie vom zweiten Signalgenerator 38 (FIG 2) erzeugt und anschließend durch die Ansteuerlogik 34 kombiniert werden, gezeigt. Die Beispiele in den beiden oberen Darstellungen von FIG 3 können als Spezialisierung mit konstanten Stromschwellen $I_{lim\_lev}$ und $I_{lim\_lev2}$ aufgefasst werden, wobei zusätzlich als Symmetriebedingung

$$I_{lim\_lev2} = I_{lim\_lev2-} \text{ und } I_{lim\_lev} = I_{lim\_lev-}$$

gilt. Nachfolgend wird die Funktionsweise der Ansteuerschaltung 30 unter Verwendung der Symbole und Bezugszeichen in FIG 1 und FIG 2 anhand des Stromverlaufs für $i_R$ (= $-i_1$) gezeigt.

In den nachfolgenden Tabellen ist in der linken Spalte jeweils der Strombereich dargestellt und in der sich daran anschließenden zweiten Spalte der Schaltbefehl für die Stromeinprägung (FIG 2: $m_I$), also die Daten, wie sie sich für die stromeinprägende Modulation am Ausgang des zweiten Signalgenerators 38 (FIG 2) ergeben. In der anschließenden dritten Spalte sind die Schaltbefehle für die Spannungseinprägung (FIG 2: $m_U$) gezeigt, also die Daten, wie sie vom ersten Signalgenerator 36 zur spannungseinprägenden Modulation erzeugt werden. In der vierten und letzten Spalte ist als kombinierter Schaltbefehl die logische Verknüpfung der Schaltbefehle für die Strom- und Spannungseinprägung gezeigt. Konkret wird jeweils das Ergebnis einer logischen UND-Verknüpfung gezeigt, wie sie von der Ansteuerlogik 34 (FIG 2) vorgenommen wird. Man erkennt also an der ersten Tabelle (Tabelle 1, Zustand 1), dass, wenn der Strom den jeweiligen Schwellwert überschreitet, die Schaltbefehle zur Stromeinprägung dominieren und als Ansteuersignal 32 die Schaltbefehle zur Stromeinprägung an die einzelnen Halbleiterschalter T1-T6 des Leistungsteils des Stromrichters 10 (FIG 2) ausgegeben werden. Für die anderen Phasen ($i_S$, $i_T$; FIG 1) gelten die Situationen entsprechend der ersten Tabelle und der nachfolgenden Tabellen mit jeweils anderen Indices entsprechend.

Die zweite Tabelle (Tabelle 2, Zustand 2) zeigt die Situation beim Erreichen der unteren Stromgrenze und die dritte Tabelle (Tabelle 3, Zustand 0) zeigt die Situation solange der Strom in einem zulässigen Toleranzbereich (Stromsollwert 42, Stromtoleranzbereich 44) verbleibt, so dass eine reine Spannungseinprägung, z. B. auf Basis der Pulsweitenmodulation, wirksam ist.

Tabelle 1, Zustand 1: Obere Stromgrenze erreicht, die als Halbleiterschalter T1-T6 fungierenden Transistoren werden zum Stromabbau ausgeschaltet.

| Strombereich | Schaltbefehl I-Einprägung m_U | Schaltbefehl U-Einprägung m_I | Kombinierter Schaltbefehl (m_U UND m_I) |
|---|---|---|---|
| $i_1 \geq I_{lim\_lev}$ | $T_{1\_I} = 0$ <br> $T_{2\_I} = 1$ | $T_{1\_U}$ aus PWM <br> $T_{2\_U}$ aus PWM | $T_1 = (T_{1\_I} \text{ UND } T_{1\_U}) = 0$ <br> $T_2 = (T_{2\_I} \text{ UND } T_{2\_U}) = T_{2\_U}$ |

Tabelle 2, Zustand 2: Untere Stromgrenze erreicht, Transistor ausschalten zum Stromabbau

| Strombereich | Schaltbefehl I-Einprägung m_U | Schaltbefehl U-Einprägung m_I | Kombinierter Schaltbefehl (m_U UND m_I) |
|---|---|---|---|
| $i_1 \leq I_{\text{lim\_lev-}}$ | $T_{1-I} = 1$ $T_{2\_I} = 0$ | $T_{1\_U}$ aus PWM $T_{2\_U}$ aus PWM | $T_1 = (T_{1\_I}\ \text{UND}\ T_{1\_U}) = T_{1\_U}$ $T_2 = (T_{2\_I}\ \text{UND}\ T_{2\_U}) = 0$ |

Tabelle 3, Zustand 0: zulässiger Toleranzbereich für den Strom, reine Spannungseinprägung wirksam (z. B. mit PWM)

| Strombereich | Schaltbefehl I-Einprägung m_U | Schaltbefehl U-Einprägung m_I | Kombinierter Schaltbefehl (m_U UND m_I) |
|---|---|---|---|
| $I_{\text{lim\_lev2-}} < i_1\ \wedge$ $i_1 < I_{\text{lim\_lev2}}$ | $T_{1\_I} = 1$ $T_{2\_I} = 1$ | $T_{1\_U}$ aus PWM $T_{2\_U}$ aus PWM | $T_1 = (T_{1\_I}\ \text{UND}\ T_{1\_U}) = T_{1\_U}$ $T_2 = (T_{2\_I}\ \text{UND}\ T_{2\_U}) = T_{2\_U}$ |

In den "Zustand 0" (siehe oben, dritte Tabelle) kann auch gewechselt werden, wenn die Schwellen $i_{\text{lim\_lev2}}$ oder $i_{\text{lim\_lev2-}}$ unterschritten werden, oder mit Beginn des jeweils nächsten Arbeitstaktes/Modulationsintervalls.

In der dritten Darstellung in FIG 3 war ein Betriebsverfahren mit dauerhaft reiner Stromhysterese unabhängig vom Arbeitstakt und mit dynamischen Stromschwellen gezeigt. Das in der dritten Darstellung von FIG 3 illustrierte Schaltverhalten ergibt sich entsprechend der nachfolgenden beiden Tabellen (Tabelle 4, Zustand 1 und Tabelle 5, Zustand 2), jeweils bei Erreichen entweder der oberen oder unteren Schwelle (Zustand 1 bzw. Zustand 2), wobei einer der Halbleiterschalter T1-T6 zum Stromabbau ausgeschaltet wird.

Um wie zuvor beschrieben eine Bildung unerwünschter Schaltzyklen zu vermeiden, wird dabei für die Spannungseinprägung zwischen m_U = 1 und m_U = PWM gewechselt. Der Spannungssollwert für die Spannungseinprägung ist dabei z. B. aus der Stromregelung bekannt oder entspricht z. B. dem Ausgangsspannungs-Mittelwert im vorangegangenen Abtastschritt.

Tabelle 4, Zustand 1: Obere Stromgrenze erreicht, Transistor ausschalten zum Stromabbau

| Strombereich | Schaltbefehl I-Einprägung m_I | Schaltbefehl U-Einprägung m_U | Kombinierter Schaltbefehl (m_I UND m_U) |
|---|---|---|---|
| $i_1 >= I_{\text{lim\_lev}}$ | $T_{1\_I} = 0$ $T_{2\_I} = 1$ | $T_{1\_U} = 1$ $T_{2\_U} = 1$ | $T_1 = (T_{1\_I}\ \text{UND}\ T_{1\_U}) = 0$ $T_2 = (T_{2\_I}\ \text{UND}\ T_{2\_U}) = 1$ |

Tabelle 5, Zustand 2: Untere Stromgrenze erreicht, Transistor ausschalten zum Stromabbau

| Strombereich | Schaltbefehl I-Einprägung m_U | Schaltbefehl U-Einprägung m_I | Kombinierter Schaltbefehl (m_U UND m_I) |
|---|---|---|---|
| $i_1 <= I_{\text{lim\_lev}}$ | $T_{1\_I} = 1$ $T_{2\_I} = 0$ | $T_{1\_U} = 1$ $T_{2\_U} = 1$ | $T_1 = (T_{1\_I}\ \text{UND}\ T_{1\_U}) = 1$ $T_2 = (T_{2\_I}\ \text{UND}\ T_{2\_U}) = 0$ |

Damit lässt sich die Erfindung kurz wie folgt darstellen: Es wird ein Verfahren zum Betrieb eines Stromrichters 10 mit einem mit steuerbaren Halbleiterschaltern T1-T6 bestückten Leistungsteil, wobei eine Ansteuerung der Halbleiterschalter T1-T6 mittels einer Ansteuerlogik 34 auf Basis davon erzeugter Ansteuersignale 32 und ein nach dem Verfahren arbeitender Stromrichter 10 angegeben, die sich dadurch auszeichnen, dass die Ansteuerlogik 34 Daten für eine spannungseinprägende Modulation und Daten für eine stromeinprägende Modulation erhält und eine logische Verknüpfung der erhaltenen Daten für die Generierung der Ansteuersignale 32 vornimmt.

**Patentansprüche**

1. Verfahren zum Betrieb eines Stromrichters (10) mit einem mit steuerbaren Halbleiterschaltern (T1, T2, T3, T4, T5, T6) bestückten Leistungsteil,
wobei eine Ansteuerung der Halbleiterschalter (T1-T6) mittels einer Ansteuerlogik (34) auf Basis davon erzeugter Ansteuersignale (32) erfolgt,

**dadurch gekennzeichnet, dass**

die Ansteuerlogik (34) Daten für eine spannungseinprägende Modulation und Daten für eine stromeinprägende Modulation erhält und eine logische Verknüpfung der erhaltenen Daten für die Generierung der Ansteuersignale (32) vornimmt.

2. Verfahren nach Anspruch 1, wobei die Daten für die spannungseinprägende Modulation mit einem ersten Signalgenerator (36) erzeugt werden, und zwar in Abhängigkeit von einem dem ersten Signalgenerator (36) zugeführten Spannungssollwert (40) .

3. Verfahren nach Anspruch 1 oder 2, wobei die Daten für die stromeinprägende Modulation mit einem zweiten Signalgenerator (38) erzeugt werden, und zwar in Abhängigkeit von einem dem zweiten Signalgenerator (38) zugeführten Stromsollwert (42), insbesondere in Abhängigkeit von dem zugeführten Stromsollwert (42) und einem zugeführten Wert für einen Stromtoleranzbereich (44).

4. Verfahren nach Anspruch 3, wobei die Daten für die stromeinprägende Modulation von einem Ergebnis einer Strommessung (46) im Leistungsteil abhängig sind.

5. Verfahren nach einem der Ansprüche 2, 3 oder 4, wobei die Daten für die spannungseinprägende Modulation von einem Ergebnis einer Spannungsmessung (48) im Leistungsteil abhängig sind.

6. Verfahren nach einem der vorangehenden Ansprüche, wobei die durch die Ansteuerlogik (34) vorgenommene Verknüpfung der Daten für die spannungseinprägende Modulation mit den Daten für die stromeinprägende Modulation eine logische UND-Verknüpfung ist.

7. Stromrichtergerät mit einem Stromrichter (10) mit einem mit steuerbaren Halbleiterschaltern (T1, T2, T3, T4, T5, T6) bestückten Leistungsteil und
mit einer Ansteuerlogik (34) zur Erzeugung von Ansteuersignalen (32) für eine Ansteuerung der Halbleiterschalter (T1-T6), **dadurch gekennzeichnet, dass**
die Ansteuerlogik (34) Mittel zum Erhalt von Daten für eine spannungseinprägende Modulation und von Daten für eine stromeinprägende Modulation sowie Mittel für eine logische Verknüpfung der erhaltenen Daten zur Generierung der Ansteuersignale (32) umfasst.

8. Stromrichtergerät nach Anspruch 7, mit einer gleichzeitig als Mittel zum Erhalt von Daten für die spannungseinprägende Modulation und von Daten für die stromeinprägende Modulation und als Mittel für eine logische Verknüpfung der erhaltenen Daten zur Generierung der Ansteuersignale (32) fungierenden Verarbeitungseinheit.

9. Stromrichtergerät nach Anspruch 7 oder 8, wobei das Mittel für die logische Verknüpfung der erhaltenen Daten zur Generierung der Ansteuersignale (32) ein UND-Glied ist.

10. Computerprogramm mit durch einen Computer ausführbaren Programmcodeanweisungen zur Implementierung des Verfahrens nach einem der Ansprüche 1 bis 6, wenn das Computerprogramm auf einem Computer ausgeführt wird.

11. Speichermedium mit einem durch einen Computer ausführbaren Computerprogramm gemäß Anspruch 10.

12. Stromrichtergerät nach einem der Ansprüche 7, 8 oder 9, auf dem ein Computerprogramm nach Anspruch 10 geladen ist.

**Claims**

1. Method for operating a frequency converter (10) with a power element equipped with controllable semiconductor switches (T1, T2, T3, T4, T5, T6),
wherein the semiconductor switches (T1-T6) are controlled by means of a control logic (34) on the basis of control signals (32) generated thereby,
**characterised in that**
the control logic (34) receives data for a voltage-impressing modulation and data for a current-impressing modulation and carries out a logical linking of the received data for the purpose of generating the control signals (32).

**2.** Method according to claim 1, wherein the data for the voltage-impressing modulation is generated with a first signal generator (36), namely as a function of a voltage target value (40) supplied to the first signal generator (36).

**3.** Method according to claim 1 or 2, wherein the data for the current-impressing modulation is generated with a second signal generator (38), namely as a function of a current target value (42) supplied to the second signal generator (38), in particular as a function of the supplied current target value (42) and a supplied value for a current tolerance range (44).

**4.** Method according to claim 3, wherein the data for the current-impressing modulation is dependent on a result of a current measurement (46) in the power element.

**5.** Method according to one of claims 2, 3 or 4, wherein the data for the voltage-impressing modulation is dependent on a result of a voltage measurement (48) in the power element.

**6.** Method according to one of the preceding claims, wherein the linking of the data for the voltage-impressing modulation with the data for the current-impressing modulation carried out by the control logic (34) is a logical AND connection.

**7.** Frequency converter device with a frequency converter (10) with a power element equipped with controllable semiconductor switches (T1, T2, T3, T4, T5, T6) and with a control logic (34) for generating control signals (32) for controlling the semiconductor switches (T1-T6), **characterised in that** the control logic (34) comprises means for receiving data for a voltage-impressing modulation and data for a current-impressing modulation as well as means for a logical linking of the received data for the purpose of generating the control signals (32).

**8.** Frequency converter device according to claim 7, with a processing unit functioning simultaneously as means for receiving data for the voltage-impressing modulation and data for the current-impressing modulation and as means for a logical linking of the received data for the purpose of generating control signals (32).

**9.** Frequency converter device according to claim 7 or 8, wherein the means for the logical linking of the received data for the purpose of generating the control signals (32) is an AND gate.

**10.** Computer program with program code statements which can be executed by a computer for the purpose of implementing the method according to one of claims 1 to 6, when the computer program is executed on a computer.

**11.** Storage means with a computer program according to claim 10 which can be executed by a computer.

**12.** Frequency converter device according to one of claims 7, 8 or 8, onto which a computer program according to claim 10 is loaded.

**Revendications**

**1.** Procédé pour faire fonctionner un convertisseur (10), comprenant une partie de puissance pourvue d'interrupteurs (T1, T2, T3, T4, T5, T6) à semi-conducteurs pouvant être commandés, dans lequel une commande des interrupteurs (T1 à T6) à semi-conducteurs s'effectue au moyen d'une logique (34) de commande sur la base de signaux (32) de commande qu'elle produit, **caractérisé en ce que** la logique (34) de commande reçoit des données pour une modulation imprimant la tension et des données pour une modulation imprimant le courant et il s'effectue une combinaison logique des données obtenues pour la production des signaux (32) de commande.

**2.** Procédé suivant la revendication 1, dans lequel on produit des données pour la modulation imprimant la tension par un premier générateur de signal et cela en fonction d'une valeur (40) de consigne de tension envoyée au premier générateur (36) de signal.

**3.** Procédé suivant la revendication 1 ou 2, dans lequel on produit les données pour la modulation imprimant le courant par un deuxième générateur (38) de signal et cela en fonction d'une valeur (42) de consigne de courant envoyée au deuxième générateur (38) de signal, notamment en fonction de la valeur (42) de consigne de courant envoyée et d'une valeur envoyée d'une plage (44) de tolérance de courant.

4. Procédé suivant la revendication 3, dans lequel les données pour la modulation imprimant le courant dépendent d'un résultat d'une mesure (46) de courant dans la partie de puissance.

5. Procédé suivant l'une des revendications 2, 3 ou 4, dans lequel les données pour la modulation imprimant la tension dépendent d'un résultat d'une mesure (48) de tension dans la partie de puissance.

6. Procédé suivant l'une des revendications précédentes, dans lequel la combinaison effectuée par la logique (34) de commande des données pour la modulation imprimant la tension aux données pour la modulation imprimant le courant est une combinaison ET logique.

7. Appareil à convertisseur, comprenant un convertisseur (10) ayant une partie de puissance pourvue d'interrupteurs (T1, T2, T3, T4, T5, T6) à semi-conducteurs pouvant être commandés et comprenant une logique (34) de commande pour produire des signaux (32) de commande pour commander les interrupteurs (T1 à T6) à semi-conducteurs,
**caractérisé en ce que**
la logique (34) de commande comprend des moyens pour obtenir des données pour une modulation imprimant la tension et des données pour une modulation imprimant le courant, ainsi que des moyens pour une combinaison logique des données obtenues afin de produire les signaux (32) de commande.

8. Appareil à convertisseur suivant la revendication 7, comprenant une unité de traitement servant en même temps de moyens pour obtenir des données pour la modulation imprimant la tension et des données pour la modulation imprimant le courant et de moyens pour une combinaison logique des données obtenues afin de produire les signaux (32) de commande.

9. Appareil à convertisseur suivant la revendication 7 ou 8, dans lequel le moyen pour la combinaison logique des données obtenues afin de produire les signaux (32) de commande est un élément ET.

10. Programme d'ordinateur ayant des instructions de code de programme pouvant être réalisées par un ordinateur pour la mise en oeuvre du procédé suivant l'une des revendications 1 à 6, lorsque le programme d'ordinateur est réalisé sur un ordinateur.

11. Support de mémoire ayant un programme d'ordinateur pouvant être réalisé par un ordinateur suivant la revendication 10.

12. Appareil à convertisseur suivant l'une des revendications 7, 8 ou 9, sur lequel un programme d'ordinateur suivant la revendication 10 est chargé.

FIG 1

EP 2 182 626 B1

FIG 2

EP 2 182 626 B1

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005012150 A1
- DE 102006015031 A1
- EP 0650249 A1
- JP 56098373 A

**In der Beschreibung aufgeführte Nicht-Patentliteratur**

- **JIANN-FUH CHEN.** *Modular parallel three-phase inverter system*